# EUROPÄISCHE PATENTSCHRIFT

(11) **EP 3 235 023 B1**
(45) Veröffentlichungstag und Bekanntmachung des Hinweises auf die Patenterteilung: **06.03.2019**
(21) Anmeldenummer: 15820848.8
(22) Anmeldetag: 21.12.2015
(51) Int. Cl.: H01M 2/02, H01M 2/10, H01M 10/6557, H01M 10/6567, H01M 10/6561, H01M 10/613

(54) **HOCHTEMPERATUR-BATTERIE**
HIGH TEMPERATURE BATTERY
BATTERIE HAUTE TEMPÉRATURE

(30) Priorität: 20.01.2015 DE 102015200821
(43) Veröffentlichungstag der Anmeldung: 25.10.2017
(73) Patentinhaber: Siemens Aktiengesellschaft, 80333 München (DE)
(72) Erfinder: MOST, Dieter, 91052 Erlangen (DE); REICHENBACHER, Roland, 96193 Wachenroth (DE)
(86) Internationale Anmeldenummer: PCT/EP2015/080807
(87) Internationale Veröffentlichungsnummer: WO 2016/116238

(56) Entgegenhaltungen:
- WO-A1-2008/077607
- WO-A1-2014/132649
- JP-A- 2008 311 130

## Beschreibung

Die Erfindung betrifft eine Hochtemperatur-Batterie mit einer Mehrzahl von Batteriezellen, welche jeweilige Zellgehäuse aus einem elektrisch leitfähigen Material aufweisen. Wenigstens ein Separator aus einem elektrisch isolierenden Material ist zwischen den Zellgehäusen benachbarter Batteriezellen angeordnet.

Hochtemperatur-Batterien werden in einem Temperaturbereich zwischen etwa 150 °C und etwa 350 °C betrieben. Bei niedrigeren Temperaturen sind solche Batterien, welche auch als Thermalbatterien bezeichnet werden, inaktiv. Erst bei den hohen Betriebstemperaturen schmelzen ein Elektrolyt oder die Elektroden, sodass eine für die Bereitstellung elektrischer Energie ausreichende Energieübertragung zwischen den Elektroden zustande kommt. Die Batteriezellen können beispielsweise vom Typ des Natrium-Schwefel-Akkumulators (NaS-Akkumulator) oder als Natrium-Nickelchlorid-Zellen (NaNiCl₂-Zellen) ausgebildet sein. Bei NaNiCl₂-Zellen ist beispielsweise ein fester Elektrolyt auf Basis keramischen Beta-Aluminats verbaut, welcher die beiden Halbzellen der jeweiligen Batteriezelle trennt. Dieser feste Elektrolyt wird erst bei erhöhten Temperaturen über 150°C signifikant leitfähig.

Die WO 2008/077607 A1 beschreibt eine Hochtemperatur-Batterie mit einer Kühlvorrichtung, welche aus einer Mantelfläche besteht, die ein in sich geschlossener, gebogener Streifen aus einem nicht-leitenden Werkstoff ist. Zwischen der Mantelfläche und jeweiligen Zellen der Hochtemperatur-Batterie ist ein zu einer Deckplatte der Batterie hin offener Spaltraum gebildet. Durch Löcher in der Mantelfläche strömendes Gas trifft auf die zylindrischen Wände der Zellen auf und strömt in der Folge durch die Deckplatte ab.

Die einzelnen Batteriezellen sind üblicherweise in einem Modulgehäuse aufrecht stehend und mit wenigen Millimetern Abstand voneinander angeordnet, sodass die Batteriezellen in dem Modulgehäuse vergleichsweise kompakt gepackt sind. Im Ladebetrieb und Entladebetrieb ist es vorteilhaft, die Batteriezellen auf einem möglichst konstanten Temperaturniveau zu halten.

Gerade der keramische Elektrolyt, aber auch die üblicherweise verwendeten TCB-Dichtungen (TCB = thermal glass bonding, thermische Verklebung mittels Glas) am Übergang der Beta-Aluminat-Keramik zum Metall reagieren empfindlich auf Stress aufgrund sowohl thermischer, als auch mechanischer Spannung. Starke thermische Wechselbelastungen der Batteriezellen oder dynamische Temperaturunterschiede entlang der Batteriezellen beispielsweise während des Lade- beziehungsweise Entladeprozesses führen dadurch zu einer beschleunigten Alterung derselben und verringern daher die Lebensdauer der Hochtemperatur-Batterie.

Im Betrieb der Batterie (also beim Laden / Entladen) kommt es zu einer permanenten Wärmefreisetzung infolge irreversibler Verluste, beispielsweise an den inneren Widerständen, die sowohl chemisch durch Ionen-Diffusion, als auch elektrisch bedingt sein können. Parallel dazu kommt es während des Lade- und des Entladevorganges durch die zugrunde liegenden Reaktionsenthalpien der chemischen Speicherreaktion zu einer überlagerten reversiblen Freisetzung beziehungsweise Bindung von Reaktionswärme. Dieser Effekt ist bei höheren spezifischen Lade- und Entladeraten geringer als die Wärmefreisetzung durch irreversible Verluste. Der Batterie muss also üblicherweise im aktiven Betrieb permanent Energie entzogen werden, um eine Überhitzung zu vermeiden. Dies kann durch eine "aktive Kühlung" durch Konvektion oder, falls ausreichend, durch passive Wärmeableitung in die Umgebung erfolgen. Im Stillstand beziehungsweise bei sehr geringen Lade- und Entladeraten gilt es dagegen thermische Verluste an die Umgebung aufgrund einer in der Wirkung immer begrenzten thermischen Isolierung auszugleichen.

Bei einer aus dem Stand der Technik bekannten Hochtemperatur-Batterie kommt eine Luftkühlung zum Einsatz. Hierbei sind zur elektrischen Isolation zwischen den Zellgehäusen der Batteriezellen Schichten aus Glimmer angeordnet. Glimmer hat aber den Nachteil, dass aufgrund seiner weichen, nachgiebigen Beschaffenheit keine stabilen selbsttragenden Strukturen, wie beispielsweise Haltegitter aufgebaut werden können.

Des Weiteren greifen Kühl- beziehungsweise Leitbleche (im weitern kurz Kühlbleche) fingerartig zwischen die benachbarten Batteriezellen. Hierbei erstrecken sich die jeweiligen Kühlbleche parallel zueinander entlang von Reihen jeweiliger Batteriezellen. Mithilfe eines Lüfters werden die Kühlbleche mit Umgebungsluft beaufschlagt. Die Kühlbleche sind hierbei jedoch lediglich entlang einer von vier Seitenwänden der im Querschnitt rechteckigen Batteriezellen angeordnet. Zudem liegen die Kühlbleche nicht direkt an den Zellgehäusen der Batteriezellen an, da dies zu einem elektrischen Kurzschluss führen würde. Die Wärmeübertragung zwischen den Batteriezellen und den Kühlblechen ist folglich wenig effizient. Zudem führt eine derartige Luftkühlung zu einer ungleichmäßigen Wärmeverteilung innerhalb der Hochtemperatur-Batteriezellen, da die Kühlbleche in dieser Konfiguration typischerweise nur in der Nähe einer Seitenwand des Zellgehäuses angeordnet werden können.

Den Gestaltungsmöglichkeiten der Kühlbleche und insbesondere der Strömungsführung sind durch das Material der Kühlbleche, durch die Notwendigkeit der Vermeidung elektrischer Kurzschlüsse zwischen den Batteriezellen und einer möglichst kompakten Bauweise als Designziel enge Grenzen gesetzt, so dass üblicherweise nur fingerartige Kühlbleche in der Batterie umgesetzt werden können. Eine homogene Temperaturverteilung und eine gleichmäßige Temperierung über die gesamte Batterie mit mehreren Batteriezellen ist damit jedoch nicht umsetzbar.

Aufgabe der vorliegenden Erfindung ist es daher, eine Hochtemperatur-Batterie der eingangs genannten Art zu schaffen, bei welcher eine verbesserte Kühlung erreichbar ist.

Diese Aufgabe wird durch eine Hochtemperatur-Batterie mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Die erfindungsgemäße Hochtemperatur-Batterie umfasst eine Mehrzahl von Batteriezellen, welche jeweilige Zellgehäuse aus einem elektrisch leitfähigen Material aufweisen. Wenigstens ein Separator aus einem elektrisch isolierenden Material ist zwischen den Zellgehäusen benachbarter Batteriezellen angeordnet. Der wenigstens eine Separator umfasst einen Kunststoff und bildet eine selbsttragende Struktur aus, welche wenigstens einen Kanal umfasst, welcher von einem gasförmigen Temperiermedium oder von einer Temperierflüssigkeit durchströmt werden kann, um Wärme von den Batteriezellen abzuführen. Eine durch den wenigstens einen Kanal gebildete Kanalstruktur sorgt für eine zwangsgeführte Strömung des Temperiermediums entlang der Batteriezellen in einem Zellverbund der Hochtemperatur-Batterie. Durch die elektrisch isolierenden Eigenschaften des den Kunststoff umfassenden Separators ist eine sichere galvanische Trennung der Zellgehäuse voneinander sichergestellt.

Des Weiteren ist eine verbesserte Kühlung ermöglicht, da der wenigstens eine durch den Separator gebildete Kanal, nicht nur von Luft, einem inerten Gas oder einem derartigen gasförmigen Fluid, sondern auch von einer Temperierflüssigkeit durchströmbar ist. Dem liegt die Erkenntnis zugrunde, dass der Glimmer, welcher zur elektrischen Isolierung zwischen den Zellgehäusen bei aus dem Stand der Technik bekannten Hochtemperatur-Batterien zum Einsatz kommt, ein Faserwerkstoff ist, welcher keine Flüssigkeitskühlung zulässt. Demgegenüber kann bei der erfindungsgemäßen Hochtemperatur-Batterie die Temperierflüssigkeit durch den wenigstens einen Kanal geleitet werden und so Wärme von den Batteriezellen abführen, welche im Ladebetrieb und im Entladebetrieb der Batteriezellen freigesetzt wird.

Innerhalb einer durch den wenigstens einen Kanal gebildeten Kanalführung oder Kanalstruktur gibt es bevorzugt einen unmittelbaren Kontakt zwischen dem Temperiermedium und dem Zellgehäuse. Ohne das Hindernis eines etwaigen Isolationsmaterials ermöglicht dies eine maximale Wärmeübertragung an dieser Fläche.

Der Ersatz des Glimmers oder anderer Faserwerkstoffe durch den Separator, welcher den Kunststoff umfasst, bietet eine Reihe von Vorteilen. So ist der den Separator bildende Werkstoff gut formbar und auch mechanisch bearbeitbar. Dies ermöglicht es, auf besonders einfache Art und Weise definierte Kanäle oder Bohrungen vorzusehen, welche beispielsweise von der Luft oder der Temperierflüssigkeit durchströmt werden können.

Dem Separator kann also leicht eine für das jeweilige Temperiermedium durchlässige und im Hinblick auf die Strömung optimierte, selbstragende Struktur verliehen werden. Durch diese Art der Gestaltungsmöglichkeit des Separators ist eine besonders große Designfreiheit erreichbar.

Im Gegensatz zu einem prinzipiell auch einsetzbaren keramischen Separator weist der den Kunststoff umfassende Separator nicht die Sprödigkeit auf, welche Keramiken haben. Zudem sind Separatoren aus keramischem Material nur in sehr einfachen Formen erhältlich, oder sie sind bei komplexeren Gestaltungen sehr teuer in der Herstellung. Der den Kunststoff umfassende Separator bringt demgegenüber bei vergleichsweise niedrigen Herstellungskosten besonders große Gestaltungsspielräume mit sich.

Für eine gute elektrische Isolation lassen sich Materialstärken des Separators ab 1 Millimeter Dicke vorsehen, welche sowohl eine ausreichende elektrische Isolation gewährleisten als auch das Ausbilden von definierten Kühlkanälen in dem Separator ermöglichen.

Der wenigstens eine Separator ist an denjenigen Seiten des Zellgehäuses der jeweiligen Batteriezelle angeordnet, welche wenigstens einer weiteren Batteriezelle benachbart sind. Dadurch lässt sich eine besonders gleichmäßige Kühlung der Batteriezellen erreichen. Hierfür kann nämlich der wenigstens eine Kanal von Luft oder einem anderen gasförmigen Temperiermedium, etwa einem Inertgas, oder insbesondere von der Temperierflüssigkeit durchströmt werden.

Neben dem Glimmer, welcher bei aus dem Stand der Technik bekannten Hochtemperatur-Batterien verwendet wird, können auch die aus dem Stand der Technik bekannten Leit- beziehungsweise Kühlbleche entfallen. Der wenigstens eine Kanal, welcher insbesondere ein Kanalsystem bilden kann, und die mittels des wenigstens einen Kanals realisierte Strömungsführung sorgen dafür, dass das Temperiermedium strömungstechnisch besonders gut und gleichmäßig auf die Batteriezellen verteilt wird und an die Zellgehäuse der Batteriezellen herangeführt werden kann, ohne dass hierfür extra eingebaute Leit- beziehungsweise Kühlbleche benötigt werden. Somit ist eine besonders gleichmäßige und besonders hohe Kühlleistung beim Kühlen der Batteriezellen erreichbar.

Der Separator ist des Weiteren sowohl bei einer Hochtemperatur-Batterie einsetzbar, welche eine Luftkühlung nutzt, als auch bei einer Hochtemperatur-Batterie, bei welcher ein flüssiges Temperiermedium, beispielsweise ein Thermoöl, zum Einsatz kommt. Als Thermoöl kann insbesondere ein Medium wie ein Mineralöl oder ein Synthetiköl, etwa ein Silikonöl, zum Einsatz kommen, welches in dem Betriebstemperaturbereich der Hochtemperatur-Batterie in flüssiger Phase vorliegt.

Da sich mittels des den Kunststoff umfassenden Separators sowohl die aus dem Stand der Technik bekannten Kühlbleche als auch die zur Isolierung vorgesehenen Glimmerlagen ersetzen lassen, lässt sich ein besonders einfacher und kostengünstiger Aufbau der Hochtemperatur-Batterie erreichen. Komplexe Kanal- und Strömungsstrukturen können durch die Verwendung eines Hochtemperaturkunststoffes auch, beispielsweise in einer Gießanlage für Kunststoff vorgefertigt werden, bevor die Batteriezellen in eine solche Separatorstruktur eingesetzt werden. Durch die verbesserte Kühlung, welche bei der Hochtemperatur-Batterie erreichbar ist, werden auch die benötigte Kühlleistung und somit die Verluste besonders gering. Dies erhöht insbesondere die Lebensdauer der Hochtemperatur-Batterie.

Erfindungsgemäß ist der wenigstens eine Kanal zumindest bereichsweise zu dem Zellgehäuse der Batteriezelle hin offen, an welchem der wenigstens eine Separator anliegt. Dadurch kann das Zellgehäuse direkt mit dem Temperiermedium in Kontakt treten, welches durch den wenigstens einen Kanal strömt. Dies führt insbesondere dann zu einer besonders guten Kühlung der Batteriezellen, wenn als Temperiermedium eine Temperierflüssigkeit wie etwa ein Thermoöl zum Einsatz kommt.

Hierbei hat es sich als vorteilhaft gezeigt, wenn über den wenigstens einen Kanal mehr als die Hälfte der Oberfläche eines jeweiligen Zellgehäuses mit dem gasförmigen Temperiermedium oder mit der Temperierflüssigkeit beaufschlagbar ist. So ist nämlich eine besonders gleichmäßige Kühlung der Batteriezellen erreichbar. Dies gilt insbesondere, wenn etwa 80% der Oberfläche eines jeweiligen Zellgehäuses mit Luft oder einem inerten Gas als dem Temperiermedium, oder insbesondere mit der Temperierflüssigkeit beaufschlagt werden.

Als weiter vorteilhaft hat es sich gezeigt, wenn der Separator bei einer Temperatur von über 300°C temperaturfest ist. So kann sichergestellt werden dass der Separator bei einer typischen Betriebstemperatur im Normalbetrieb (Laden und Entladen) von bis zu 350°C beständig, insbesondere formbeständig bleibt. Bevorzugt ist der Separator bei einer Temperatur von über 400°C, insbesondere von bis zu etwa 450°C temperaturfest. Beispielsweise können nämlich Hochtemperatur-Batteriezellen auf Basis von NaS und NaNiCl₂ mit einer Thermoölkühlung im nicht bestimmungsgemäßen Betrieb (etwa bei einem Schaden infolge eines internen Kurzschlusses) kurzzeitig (etwa über eine Zeitspanne kleiner 5 min hinweg) einen Temperaturbereich von maximal 450°C erreichen.

Als weiter vorteilhaft hat es sich gezeigt, wenn der Kunststoff ein Matrixmaterial bildet, in welchem Fasern angeordnet sind. In einem solchen Faserverbundwerkstoff tragen die Fasern verstärkend dazu bei, dass der Separator eine besonders hohe Temperaturfestigkeit hat. Der Temperaturfestigkeit des Separators ist es des Weiteren zuträglich, wenn als der wenigstens eine Kunststoff in dem Separator Polytetrafluorethen und/oder wenigstens ein Polyimid zum Einsatz kommt.

Die Fasern können als Aluminiumoxidfasern und/oder als Karbonfasern und/oder als Silikatfasern und/oder als Basaltfasern ausgebildet sein. Bei Verwendung eines solchen Faserverbundwerkstoffs, bei welchem der wenigstens eine Kunststoff die Matrix bildet und derartige Fasern eine Art Gerüst, lässt sich ein Separator bereitstellen, welcher selbst bei Temperaturen von bis zu 550°C temperaturbeständig ist und dennoch eine gute mechanische Verarbeitung zulässt. Daher ist ein derartig aufgebauter Separator für die Verwendung in Hochtemperatur-Batterien besonders geeignet.

Der wenigstens eine Kanal kann durch Urformen aus einem den Separator bereitstellenden Werkstoff gebildet sein. Der hochtemperaturfeste Kompositwerkstoff weist nämlich eine besonders gute Formbarkeit auf, welche das Ausbilden von mit geringem Strömungswiderstand durchströmbaren Kanälen erlaubt, welche durch den Separator bereitgestellt werden. Zusätzlich oder alternativ kann der wenigstens eine Kanal durch wenigstens ein Trennverfahren, etwa durch ein spanabtragendes Verfahren oder durch sonstiges Abtragen aus dem den Separator bereitstellenden Werkstoff gebildet sein. Insbesondere durch Fräsen oder Bohren lassen sich nämlich auch komplexe Kanalstrukturen mit einem von wenigstens einem Einlass in die Hochtemperatur-Batterie bis zu wenigstens einem Auslass für das Temperiermedium durchgängig ausgebildeten Kanälen besonders leicht bereitstellen.

Zusätzlich oder alternativ kann der wenigstens eine Kanal durch Anordnen wenigstens eines ersten Separatorteils an einem wenigstens einem zweiten Separatorteil gebildet sein. So können beispielsweise verschieden dicke, den Kunststoff aufweisende Platten und Streifen aneinander angeordnet werden, um den wenigstens einen Kanal zu bilden. Beispielsweise kann durch Anordnen zweier aus dem Kunststoff-Werkstoff gebildeter und parallel zueinander ausgerichteter Streifen an einer aus dem Kunststoff-Werkstoff gebildeten Platte ein von der Temperierflüssigkeit durchströmbarer Kanal bereitgestellt werden. Eine solche Art der Ausbildung des wenigstens einen Kanals oder einer Kanalstruktur mit einer Vielzahl von durchgängig ausgebildeten Kanälen ist fertigungstechnisch besonders aufwandsarm und flexibel.

Hierbei hat es sich als vorteilhaft gezeigt, wenn das wenigstens eine erste Separatorteil durch Zusammenstecken mit dem wenigstens einen zweiten Separatorteil verbunden ist. Durch Vorsehen eines solchen Stecksystems lässt sich der Separator besonders gut in Zwischenräume zwischen den Batteriezellen einbringen. Zusätzlich oder alternativ kann durch, insbesondere zusammensteckbare, Separatoren eine Stützstruktur bereitgestellt werden, welche selbsttragende Aufnahmeräume für die Batteriezellen aufweist.

Schließlich hat es sich als vorteilhaft gezeigt, wenn der wenigstens eine Separator zwischen einem Modulgehäuse der Hochtemperatur-Batterie und denjenigen Batteriezellen angeordnet ist, welche Wänden des Modulgehäuses benachbart angeordnet sind. Üblicherweise ist nämlich das Modulgehäuse einer Hochtemperatur-Batterie aus einem metallischen Werkstoff gebildet. Durch das Anordnen des wenigstens einen Separators in einen Zwischenraum zwischen dem Modulgehäuse und Außenseiten der benachbart zu Wänden des Modulgehäuses angeordneten Batteriezellen lässt sich auch hier eine elektrische Isolierung und ein Beaufschlagen mit dem Temperiermedium sicherstellen.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigen:
- FIG 1: eine Hochtemperatur-Batterie gemäß dem Stand der Technik, bei welcher die einzelnen Batteriezellen durch Glimmerlagen elektrisch voneinander isoliert sind und bei welcher eine Luftkühlung realisiert ist; und
- FIG 2: ausschnittsweise eine Hochtemperatur-Batterie, bei welcher ein Separator aus einem wenigstens einen Kunststoff umfassenden Kompositwerkstoff für die elektrische Isolierung der Batteriezellen gegenüber einander sorgt, wobei der Separator zugleich Kanäle bildet, welche von einer Temperierflüssigkeit wie etwa einem Thermoöl durchströmt werden können.

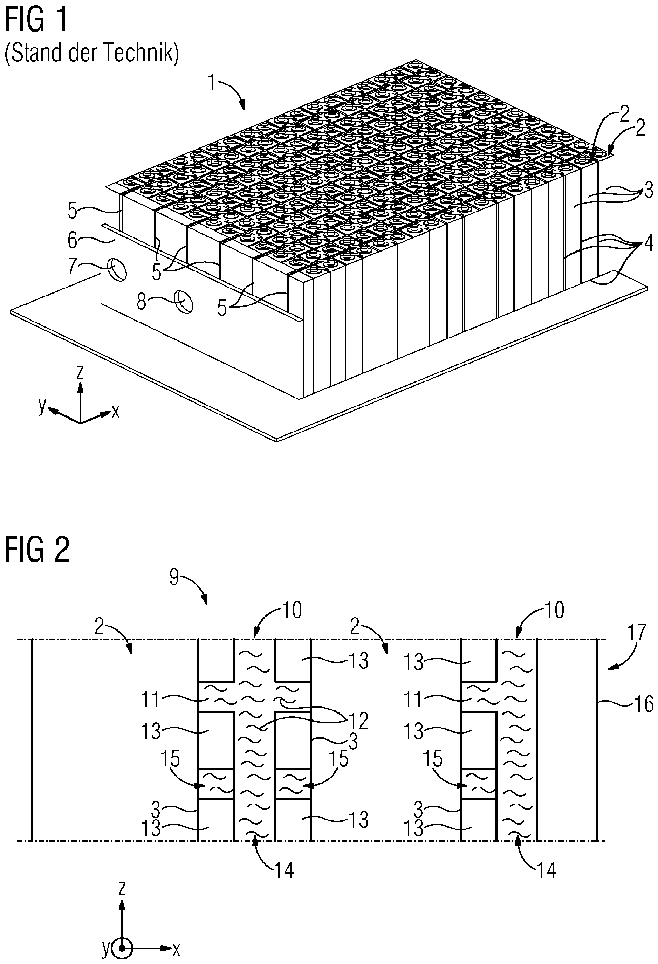

FIG 1 zeigt Komponenten einer Hochtemperatur-Batterie 1 gemäß dem Stand der Technik. Die Hochtemperatur-Batterie 1 umfasst eine Mehrzahl von Batteriezellen 2, welche Zellgehäuse 3 aus Metall aufweisen. Die Batteriezellen 2 können beispielsweise vom Typ Natrium-Nickelchlorid (NaNiCl₂) oder Natrium-Schwefel (NaS) sein, welche in einem Temperaturbereich zwischen 150°C und 350°C betrieben werden.

In der Hochtemperatur-Batterie 1 sind die einzelnen Batteriezellen 2 aufrecht stehend angeordnet, wobei zwischen den Batteriezellen 2 ein geringer Abstand vorgesehen ist. In den Zwischenräumen zwischen den Zellgehäusen 3 der Batteriezellen 2 sind zur elektrischen Isolierung Lagen von Glimmer 4 angeordnet. Die jeweilige elektrische Isolierung aus dem Glimmer 4 erstreckt sich hierbei parallel zu einer y-z-Ebene und parallel zu einer x-z-Ebene, welche anhand eines in FIG 1 angegebenen, rechtwinkligen Koordinatensystems veranschaulicht sind. Ebenso erstreckt sich eine Lage des Glimmers 4 parallel zu einer y-x-Ebene der Hochtemperatur-Batterie 1, um die Zellgehäuse 3 der Batteriezellen 2 unterseitig gegenüber einem metallischen Modulgehäuse zu isolieren.

Bei der in FIG 1 gezeigten Hochtemperatur-Batterie 1 ist eine Luftkühlung realisiert. Hierfür sind in Zwischenräumen zwischen Reihen oder Doppelreihen von Batteriezellen 2 Kühlbleche 5 angeordnet. Die Kühlbleche 5 beziehungsweise Strömungsleitbleche erstrecken sich fingerartig parallel zur x-z-Ebene zwischen die Reihen beziehungsweise Doppelreihen der Batteriezellen 2. Beispielsweise mithilfe eines Lüfters werden die Kühlbleche 5 mit Umgebungsluft als Temperiermedium angeströmt beziehungsweise durchströmt. Hierfür sind in einer stirnseitigen Platte 6 der Hochtemperatur-Batterie 1 ein Lufteinlass 7 und ein Luftauslass 8 angeordnet.

Die Kühlbleche 5 liegen jedoch nicht direkt an den Zellgehäusen 3 der Batteriezellen 2 an, da dies zu einem elektrischen Kurzschluss führen würde. Zudem befinden sich die Kühlbleche 5 konstruktionsbedingt nur an einer der vier Seitenwände der Batteriezellen 2, welche die Zellgehäuse 3 bilden. Die Wärmeübertragung zwischen den Batteriezellen 2 und den Kühlblechen 5 ist daher wenig effizient. Zudem ist die Wärmeverteilung in der Hochtemperatur-Batterie 1 ungleichmäßig, da nicht alle Seitenwände der Batteriezellen 2 gekühlt werden.

Bei einer in FIG 2 schematisch gezeigten Hochtemperatur-Batterie 9 sind die Batteriezellen 2 mit den metallischen Zellgehäusen 3 ebenfalls aufrecht stehend und mit Zwischenräumen zwischen den einzelnen Batteriezellen 2 angeordnet. Bei dieser Hochtemperatur-Batterie 9 sind jedoch der Glimmer 4 und die Kühlbleche 5 nicht vorhanden.

Zwischen jeweils benachbarten Batteriezellen 2 ist nämlich ein Separator 10 aus einem elektrisch isolierenden Material angeordnet, welcher einen Kunststoff 11 umfasst. Der Kunststoff 11 ist hochtemperaturfest, und er bildet ein Matrixmaterial, in welchem Fasern 12 angeordnet sind. Durch das Ausbilden des Separators 10 als Kompositwerkstoff, welcher den Kunststoff 11 und die Fasern 12 umfasst, weist der Separator 10 eine Temperaturbeständigkeit in dem Temperaturbereich auf, in welchem die Hochtemperatur-Batterie 9 betrieben wird, also im Temperaturbereich zwischen 150°C und 350°C.

Die Fasern 12 können beispielsweise Aluminiumoxidfasern (Al₂O₃-Fasern), Karbonfasern, Silikatfasern (SiO₂-Fasern) oder Basaltfasern umfassen. Durch die Verwendung derartiger Fasern 12 ist der Kompositwerkstoff bei Temperaturen bis 550°C beständig, und er lässt zudem eine gute mechanische Verarbeitung zu. Der Separator 10 bildet eine selbsttragende Struktur aus, welche eine Mehrzahl von Kanälen 13 bildet.

Die freie Gestaltungsmöglichkeit, welche der den Kunststoff 11 umfassende Separator 10 mit sich bringt, erlaubt es insbesondere mittels des Separators 10 die Kanäle 13 oder Strömungskanäle auszubilden, welche zur Kühlung der Hochtemperatur-Batterie 9 etwa von Luft oder von einer Temperierflüssigkeit wie etwa einem Thermoöl durchströmt werden können. Als Thermoöl kann insbesondere ein Medium wie ein Mineralöl oder ein Synthetiköl, etwa ein Silikonöl, zum Einsatz kommen, welches in dem Betriebstemperaturbereich der Hochtemperatur-Batterie 9 in flüssiger Phase vorliegt.

Insbesondere der Einsatz einer Temperierflüssigkeit wie des Thermoöls erlaubt es, eine besonders effiziente Flüssigkeitskühlung der Hochtemperatur-Batterie 9 zu realisieren.

Die Kanäle 13 sind zu den Zellgehäusen 3 der Batteriezellen 2 hin offen, zwischen welchen der wenigstens eine Separator 10 angeordnet ist. Dies ermöglicht es insbesondere, die Zellgehäuse 3 der Batteriezellen 2 direkt mit dem Temperiermedium, insbesondere mit dem Thermoöl, zu beaufschlagen, um Wärme von den Batteriezellen 2 abzuführen.

Durch die freie Gestaltbarkeit der Kanäle 13 lässt sich das Temperiermedium oder Kühlmedium besonders gut innerhalb der Hochtemperatur-Batterie 9 verteilen und auch gleichmäßig zu allen Batteriezellen 2 hin führen.

Insbesondere können sämtliche Seitenwände der Batteriezellen 2, also insbesondere die sich parallel zu der y-z-Ebene und parallel zu der x-z-Ebene erstreckenden Seitenwände, welche Bestandteile der Zellgehäuse 3 sind, mit dem Thermoöl - oder bei einer Luftkühlung mit Luft - beaufschlagt werden. Zur Veranschaulichung der genannten Ebenen ist auch in FIG 2 ein rechtwinkliges Koordinatensystem mit den Achsen x, y und z angegeben. Des Weiteren ist es durch die Formgebung der Kanäle 13 möglich, etwa 80% der Oberfläche eines jeweiligen Zellgehäuses 3 mit dem Temperiermedium zu beaufschlagen.

Die Kanäle 13 können durch Urformen oder durch Bohren oder Fräsen in dem Separator 10 ausgebildet werden. Zusätzlich oder alternativ können die Kanäle 13 durch den Einsatz verschieden dicker Platten und Streifen realisiert werden. Beispielsweise kann sich eine Platte 14 aus dem Kompositwerkstoff, aus welchem der Separator 10 gebildet ist, parallel der y-z-Ebene zwischen benachbarten Reihen von Batteriezellen 12 erstrecken. Eine solche Platte 14 bildet dann beispielsweise ein erstes Separatorteil.

An dieser Platte 14 können als zweite Separatorteile Streifen 15 aus dem den Separator 10 bildenden Kompositwerkstoff angeordnet sein. Diese Streifen 15 liegen an den jeweiligen Zellgehäusen 3 der benachbarten Batteriezellen 2 an, so dass zwischen der Platte 14 und den Zellgehäusen 3 die Kanäle 13 ausgebildet werden. Es sind jedoch auch vielfältige andere Möglichkeiten der Anordnung von Separatorteilen aneinander vorstellbar, welche zur Ausbildung der Kanäle 13 führen. Insbesondere können Stecksysteme realisiert sein, bei welchen die Separatorteile durch Zusammenstecken miteinander verbunden werden.

Der Separator 10 ist in vorliegend nicht näher gezeigter Art und Weise auch zwischen den Batteriezellen 2 und einem die Gesamtheit der Batteriezellen 2 umschließenden Modulgehäuse 17 angeordnet, von welchem vorliegend lediglich schematisch eine Wand 16 gezeigt ist. So ist auch zwischen den Wänden 16 des Modulgehäuses 17 und den Seitenwänden der Zellgehäuse 3 der Batteriezellen 2, welche den Wänden 16 des Modulgehäuses 17 zugewandt sind, eine elektrische Isolierung sichergestellt und eine Beaufschlagung mit dem Temperiermedium, insbesondere mit dem Thermoöl möglich.

Der Einsatz des Kompositwerkstoffs zum Bereitstellen des Separators 10, welcher den wenigstens einen Kunststoff 11 und die Fasern 12 umfasst, ermöglicht es auf die Kühlbleche 5 und den Glimmer 4 zu verzichten. Dies vereinfacht den Aufbau der Hochtemperatur-Batterie 9 und macht die Hochtemperatur-Batterie 9 besonders kostengünstig. Zudem wird die Kühlung der Hochtemperatur-Batterie 9 verbessert. Damit wird auch die benötigte Kühlleistung geringer, und die Lebensdauer der Hochtemperatur-Batterie 9 wird erhöht.

## Patentansprüche

1. Hochtemperatur-Batterie (9), welche im Normalbetrieb des Ladens und Entladens eine Betriebstemperatur in einem Temperaturbereich zwischen 150 °C und 350 °C aufweist, mit einer Mehrzahl von Batteriezellen (2), welche jeweilige Zellgehäuse (3) aus einem elektrisch leitfähigen Material aufweisen, und mit wenigstens einem Separator (10) aus einem elektrisch isolierenden Material, welcher zwischen den Zellgehäusen (3) benachbarter Batteriezellen (2) angeordnet ist,
**dadurch gekennzeichnet, dass**
der wenigstens eine Separator (10) einen Kunststoff (11) umfasst und eine selbsttragende Struktur ausbildet, welche wenigstens einen Kanal (13) umfasst, welcher von einem gasförmigen Temperiermedium oder von einer Temperierflüssigkeit durchströmbar ist, um Wärme von den Batteriezellen (2) abzuführen, wobei der wenigstens eine Kanal (13) zumindest bereichsweise zu dem Zellgehäuse (3) wenigstens einer der Batteriezellen (2) hin offen ist, an welchem der wenigstens eine Separator (10) anliegt.

2. Hochtemperatur-Batterie (9) nach Anspruch 1,
**dadurch gekennzeichnet, dass**
über den wenigstens einen Kanal (13) mehr als die Hälfte der Oberfläche eines jeweiligen Zellgehäuses (3) mit dem gasförmigen Temperiermedium oder mit der Temperierflüssigkeit beaufschlagbar ist.

3. Hochtemperatur-Batterie (9) nach Anspruch 2,
**dadurch gekennzeichnet, dass**
über den wenigstens einen Kanal (13) etwa 80 % der Oberfläche eines jeweiligen Zellgehäuses (3) mit dem gasförmigen Temperiermedium oder mit der Temperierflüssigkeit beaufschlagbar ist.

4. Hochtemperatur-Batterie (9) nach einem der Ansprüche 1 bis 3,
**dadurch gekennzeichnet, dass**
der Separator (10) bei einer Temperatur von über 300°C, insbesondere bei einer Temperatur von bis zu 450°C, temperaturfest ist.

5. Hochtemperatur-Batterie (9) nach einem der Ansprüche 1 bis 4,
**dadurch gekennzeichnet, dass**
der Kunststoff (11) ein Matrixmaterial bildet, in welchem Fasern (12) angeordnet sind.

6. Hochtemperatur-Batterie (9) nach Anspruch 5,
**dadurch gekennzeichnet, dass**
die Fasern (12) als Aluminiumoxidfasern und/oder als Karbonfasern und/oder als Silikatfasern und/oder als Basaltfasern ausgebildet sind.

7. Hochtemperatur-Batterie (9) nach einem der Ansprüche 1 bis 6,
**dadurch gekennzeichnet, dass**
der wenigstens eine Kanal (13) durch Urformen und/oder durch wenigstens ein Trennverfahren aus einem den Separator (10) bereitstellenden Werkstoff gebildet ist.

8. Hochtemperatur-Batterie (9) nach einem der Ansprüche 1 bis 7,
**dadurch gekennzeichnet, dass**
der wenigstens eine Kanal (13) durch Anordnen wenigstens eines ersten Separatorteils (15) an wenigstens einem zweiten Separatorteil (14) gebildet ist.

9. Hochtemperatur-Batterie (9) nach Anspruch 8,
**dadurch gekennzeichnet, dass**
das wenigstens eine erste Separatorteil (15) durch Zusammenstecken mit dem wenigstens einen zweiten Separatorteil (14) verbunden ist.

10. Hochtemperatur-Batterie (9) nach einem der Ansprüche 1 bis 9,
**dadurch gekennzeichnet, dass**
der wenigstens eine Separator (10) zwischen einem Modulgehäuse (17) der Hochtemperatur-Batterie (9) und denjenigen Batteriezellen (2) angeordnet ist, welche Wänden (16) des Modulgehäuses (17) benachbart angeordnet sind.

## Claims

1. High-temperature battery (9), which during normal operation of charging and discharging has an operating temperature in a temperature range between 150°C and 350°C, comprising a plurality of battery cells (2), which have respective cell housings (3) of an electrically conductive material, and with at least one separator (10) of an electrically insulating material, which is arranged between the cell housings (3) of adjacent battery cells (2),
**characterized in that**
the at least one separator (10) comprises a plastic (11) and forms a self-supporting structure, which comprises at least one channel (13), which can be flowed through by a gaseous temperature-control medium or by a temperature-control liquid in order to remove heat from the battery cells (2), the at least one channel (13) being open at least in certain regions towards the cell housing (3) of at least one of the battery cells (2) against which the at least one separator (10) is lying.

2. High-temperature battery (9) according to Claim 1,
**characterized in that**
by means of the at least one channel (13), more than half of the surface of a respective cell housing (3) can be subjected to the gaseous temperature-control medium or to the temperature-control liquid.

3. High-temperature battery (9) according to Claim 2,
**characterized in that**
by means of the at least one channel (13), approximately 80% of the surface of a respective cell housing (3) can be subjected to the gaseous temperature-control medium or to the temperature-control liquid.

4. High-temperature battery (9) according to one of Claims 1 to 3,
**characterized in that**
the separator (10) is temperature-resistant at a temperature of over 300°C, in particular at a temperature of up to 450°C.

5. High-temperature battery (9) according to one of Claims 1 to 4,
**characterized in that**
the plastic (11) forms a matrix material in which fibres (12) are arranged.

6. High-temperature battery (9) according to Claim 5,
**characterized in that**
the fibres (12) are formed as alumina fibres and/or as carbon fibres and/or as silicate fibres and/or as basalt fibres.

7. High-temperature battery (9) according to one of Claims 1 to 6,
**characterized in that**
the at least one channel (13) is formed by primary forming and/or by at least one cutting process from a material providing the separator (10).

8. High-temperature battery (9) according to one of Claims 1 to 7,
**characterized in that**
the at least one channel (13) is formed by arranging at least one first separator part (15) on at least one second separator part (14).

9. High-temperature battery (9) according to Claim 8,
**characterized in that**
the at least one first separator part (15) is connected to the at least one second separator part (14) by fitting together.

10. High-temperature battery (9) according to one of Claims 1 to 9,
**characterized in that**
the at least one separator (10) is arranged between a module housing (17) of the high-temperature battery (9) and those battery cells (2) that are arranged adjacent to walls (16) of the module housing (17).

## Revendications

1. Batterie (9) résistante à des températures hautes, qui, en fonctionnement normal de la charge et de la décharge, a une température de fonctionnement dans une plage de température comprise entre 150°C et 350°C, comprenant une pluralité d'éléments (2) de batterie, qui ont chacun des boîtiers (3) d'éléments en un matériau conducteur de l'électricité et comprenant au moins un séparateur (10) en un matériau isolant du point de vue électrique, qui est disposé entre les boîtiers (3) d'éléments (2) de batterie voisins,
**caractérisée en ce que**
le au moins un séparateur (10) comprend une matière (11) plastique et constitue une structure autoportante, qui comprend au moins un conduit (13), dans lequel peut passer un fluide gazeux de modération de la température ou un liquide de modération de la température, afin d'évacuer de la chaleur des éléments (2) de la batterie, le au moins un conduit (13) étant ouvert, au moins par endroit, vers le boîtier (3) d'au moins l'un des éléments (2) de la batterie, auquel s'applique le au moins un séparateur (10).

2. Batterie (9) résistant aux températures hautes suivant la revendication 1,
**caractérisée en ce que**,
par le au moins un conduit (13), plus de la moitié de la surface d'un boîtier (3) d'éléments respectif peut être alimentée en le fluide gazeux de modération de la température ou en le liquide de modération de la température.

3. Batterie (9) résistant aux températures hautes suivant la revendication 2,
**caractérisée en ce que**,
par le au moins un conduit (13), environ 80% de la surface d'un boîtier (3) d'éléments respectifs peut être alimenté en le fluide gazeux de modération de la température ou en le liquide de modération de la température.

4. Batterie (9) résistant aux températures hautes suivant l'une des revendications 1 à 3,
**caractérisée en ce que**
le séparateur (10) résiste à la température à une température supérieure à 300°C, notamment à une température allant jusqu'à 450°C.

5. Batterie (9) résistant aux températures hautes suivant l'une des revendications 1 à 4,
**caractérisée en ce que**
la matière (11) plastique forme une matière de matrice, dans laquelle sont disposées des fibres (12).

6. Batterie (9) résistant aux températures hautes suivant la revendication 5,
**caractérisée en ce que** les fibres (12) sont constituées sous la forme de fibres d'oxyde d'aluminium et/ou de fibres de carbone et/ou de fibres de silicate et/ou de fibres de basalte.

7. Batterie (9) résistant aux températures hautes suivant l'une des revendications 1 à 6,
**caractérisée en ce que**
le au moins un conduit (13) est formé par transformation et/ou par au moins un procédé de séparation d'un matériau donnant le séparateur (10).

8. Batterie (9) résistant aux températures hautes suivant l'une des revendications 1 à 7,
**caractérisée en ce que**
le au moins un conduit (13) est formé en mettant au moins une première partie (15) de séparateur sur au moins une deuxième partie (14) de séparateur.

9. Batterie (9) résistant aux températures hautes suivant la revendication 8,
**caractérisée en ce que**
la au moins une première partie (15) de séparateur est assemblée par enfichage à la au moins une deuxième partie (14) du séparateur.

10. Batterie (9) résistant aux températures hautes suivant l'une des revendications 1 à 9,
**caractérisée en ce que**
le au moins un séparateur (10) est disposé entre un boîtier (17) de module de la batterie (9) résistant aux températures hautes et les éléments (2) de la batterie, qui sont voisins de parois (16) et du boîtier (17) du module.
